# EUROPÄISCHE PATENTSCHRIFT

(11) **EP 2 311 318 B1**
(45) Veröffentlichungstag und Bekanntmachung des Hinweises auf die Patenterteilung: **13.03.2013**
(21) Anmeldenummer: 10013369.3
(22) Anmeldetag: 06.10.2010
(51) Int. Cl.: A01M 7/00, A01C 23/00

(54) **Vorrichtung zur Aufhängung und Führung von Arbeitsorganen einer landwirtschaftlichen Maschine**
Device for hanging and guiding working members of an agricultural machine
Dispositif de suspension et de guidage d'organes de travail d'une machine agricole

(30) Priorität: 15.10.2009 DE 102009049469
(43) Veröffentlichungstag der Anmeldung: 20.04.2011
(73) Patentinhaber: Lemken GmbH & Co. KG, 46519 Alpen (DE)
(72) Erfinder: Friel, Holger, 19288 Glaisin (DE)
(74) Vertreter: Schulte & Schulte

(56) Entgegenhaltungen:
- EP-A1- 0 429 934
- EP-A2- 2 064 948
- DE-A1- 10 314 686
- IE-A2- 20 020 555

## Beschreibung

Die Erfindung betrifft eine Vorrichtung zur Aufnahme und Führung eines Spritzgestänges einer Feldspritze gemäß dem Oberbegriff des Anspruches 1.

Vorrichtungen zur Aufnahme und Führung von Spritzgestängen von Feldspritzen sind bekannt. Sie haben die Aufgabe, Spritzgestänge zu führen und bei Wank- und Gierbewegungen der Feldspritze fahrdynamische Schwingungen zu dämpfen und zu tilgen. Das deutsche Gebrauchsmuster DE 20 2007 011 631 U1 zeigt ein Spritzgestänge, bei der das Spritzgestänge als Einheit an vertikal angeordneten Lenkern angeordnet ist, die bei Wankbewegungen der Feldspritze einen seitlichen Bewegungsausgleich und zusammen mit einer mittig angeordneten horizontalen Pendelachse einen Hang- bzw. Wankausgleich des Spritzgestänges bewirken. Die Wankbewegungen werden über Federdämpfer abgefedert und gedämpft. Aufgrund der großen Masse des Spritzgestänges müssen entsprechend groß dimensionierte Federdämpfer eingesetzt werden. Bei der Tilgung von Schwingungen entstehen jeweils große Rückstellkräfte, die es schwierig machen, das Spritzgestänge problemlos zu führen. Gierbewegungen der Feldspritze werden über eine vertikale Achse ausgeglichen, die eine begrenzte Gierbewegung der Feldspritze zum Gestänge ermöglicht. Auch hier treten aufgrund der großen Massenkräfte des Spritzgestänges große Rückstellkräfte auf, die mit entsprechend ausgelegten Federdämpfern nur unzureichend für eine ruhige Führung des Spritzgestänges sorgen.

Weiterhin ist aus DE 10314686 eine Vorrichtung gemäß dem Oberbegriff des Anspruchs 1 bekannt.

Bekannt sind auch Spritzgestänge, die aus zwei Spritzgestängeeinheiten bestehen, die voneinander entkoppelt sind und so mit kleineren Federdämpfern ausgestattet werden können, da weniger große Rückstellkräfte erzeugt werden. Allerdings ist auch hier noch keine Lösung bekannt, die in Summe bei Gier- und Wankbewegungen der Feldspritze, das Spritzgestänge ausreichend gut führt und die dadurch bedingten Schwingungen abfedert und dämpft.

Aufgabe der Erfindung ist es, eine Vorrichtung zur Aufnahme und Führung eines Spritzgestänges einer Feldspritze zu schaffen, die das Spritzgestänge möglichst bodenparallel führt, die sicherstellt, dass nur geringe Rückstellkräfte entstehen, die nur relativ kleine Federdämpfer erfordert und die die Krafteinwirkung auf das Hubteil und damit auf die Hubvorrichtung möglichst gering hält.

Die Aufgabe wird gemäß dem kennzeichnenden Teil des Anspruchs 1 gelöst.

Durch die besondere Anordnung der Viergelenkketten und der Schwenkrahmen mit den daran angeordneten Spritzgestängeeinheiten werden die Rückstellkräfte überwiegend von Lenkern und Federdämpfern aufgenommen und auf die gegenüberliegenden Schwenkrahmen übertragen. Die Hubvorrichtung wird dadurch nicht oder nur bedingt mit diesen Rückstellkräften belastet.

Die Erfindung sieht weiter vor, dass die Hubvorrichtung mit Hubteil durch einen Hubmast mit Hubschlitten gebildet ist.

Durch das Vorsehen eines Hubmastes mit Hubschlitten kann das Spritzgestänge kompakt und dicht an der Feldspritze höhenverstellbar geführt werden.

Erfindungsgemäß ist weiter vorgesehen, dass die Träger über Kugelgelenke oder Kreuzgelenke mit mindestens zwei Freiheitsgraden mit dem Querrahmen schwenkbar verbunden sind und dass Führungsmittel vorgesehen sind, die ein Verschwenken der Träger in Arbeitsrichtung oder entgegen der Arbeitsrichtung verhindernd und ein Verschwenken der Träger quer zur Arbeitsrichtung zulassend ausgebildet sind.

Diese Ausbildungsform ermöglicht eine einfache Ausführung der beiden Viergelenkketten, die sich auf jeder Seite ein Gelenk teilen. Anstatt zwei Achsen wie eine Längsachse und einer aufrecht stehenden Achse kommt so nur ein Kreuzgelenk oder ein Kugelgelenk zum Einsatz. Durch einfache Führungsmittel wird sichergestellt, dass die Träger nur seitlich schenken können und nicht nach vorne oder hinten.

Die Erfindung sieht weiter vor, dass mindestens ein Federdämpfer als Hydraulikzylinder mit Hydrospeicher ausgebildet ist.

Durch die Ausbildung des Federdämpfers als Hydraulikzylinder mit Hydrospeicher kann zum Beispiel der Dämpfungsgrad des Federdämpfers verändert werden, aber auch bei Bedarf die Lage der jeweiligen Viergelenkkette. Wird z.B. der Federdämpfer der ersten Viergelenkkette länger oder kürzer eingestellt, verändert sich auch die Lage der Träger und damit auch die Lage der Spritzgestängeeinheiten zum Boden. So kann dann die Lage des Spritzgestänges wie erforderlich verändert werden. In Verbindung mit GPS und nach Erfassen der Bodenkonturen in ein entsprechendes Steuerungsprogramm der Feldspritze, kann so das Gestänge automatisch bodenparallel geführt werden, auch in wechselnden Hanglagen.

Die Erfindung sieht weiter vor, dass mindestens der Federdämpfer, der mit der ersten Viergelenkkette in Verbindung steht als Gleichlaufzylinder mit zwei Druckräumen ausgebildet ist, dass jedem Druckraum mindestens ein Hydrospeicher zugeordnet ist und dass der Öldruck in den Druckräumen vorzugsweise fernbedienbar veränderbar ist.

Wenn beim Fahren mit einer angehängten Feldspritze quer zum Hang z.B. das talseitige Rad aufgrund der höheren Gewichtsbelastung tiefer in den Boden einsinkt und daher auch der Reifen etwas mehr abplattet, befindet sich das Spritzgestänge nicht mehr in der bodenparallelen Lage. In dieser Situation wird der Öldruck in dem entsprechenden Druckraum des Gleichlaufzylinders so verändert, dass das Spritzgestänge wieder bodenparallel ausgerichtet ist. Der Gleichlaufzylinder hat dann beispielsweise eine 10 cm größere Funktionslänge als die Funktionslänge, die für die Ebene eingestellt wird. Wenn nach der Kehrfahrt auf dem Vorgewende bei der Rückfahrt quer zum Hang, der Druck umgeschaltet wird, befindet sich das Spritzgestänge in der gegenüberliegenden bodenparallelen Lage. Der Druck in den beiden Druckräumen wird quasi ausgetauscht oder gespiegelt. Der Gleichlaufzylinder weist dann in diesem Beispiel eine 10 cm geringere Funktionslänge auf als die Funktionslänge, die für die Ebene eingestellt wird.

Durch den Austausch bzw. das Spiegeln der Öldrücke in den Druckräumen des Gleichlaufzylinder wird somit immer eine bodenparallele Lage des Spritzgestänges sichergestellt.

Erfindungsgemäß ist weiter vorgesehen, dass der Führungslenker als Hydraulikzylinder ausgebildet ist.

Durch das Vorsehen eines Hydraulikzylinders als Führungslenker kann die parallele Lage der Spritzgestängeeinheiten zueinander verändert werden, um beispielsweise eine Spritzgestängeeinheit anzuwinkeln. Je nach Druckeinstellung der als Federdämpfer dienenden Hydraulikzylinder bzw. Gleichlaufzylinder können die Spritzgestängeeinheiten im Winkel gleich angewinkelt werden oder unterschiedlich.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine Vorderansicht der Vorrichtung,
- Figur 2: eine Draufsicht auf die Vorrichtung,
- Figur 3: eine perspektivische Rückansicht der Vorrichtung und
- Figur 4: einen Schaltplan des Gleichlaufzylinders als Federdämpfer.

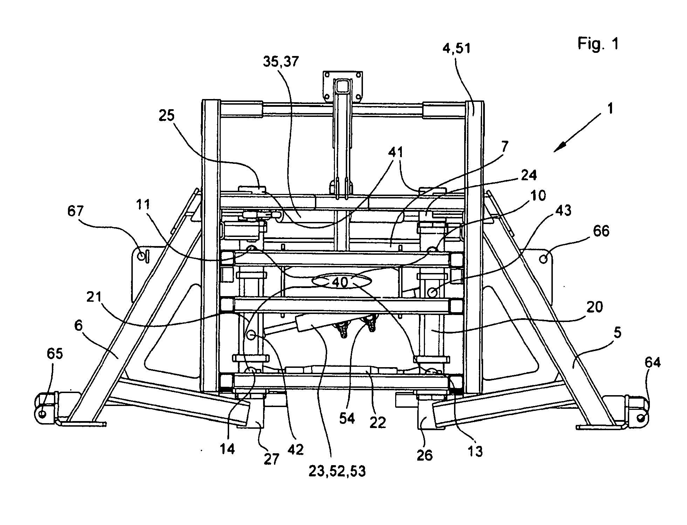

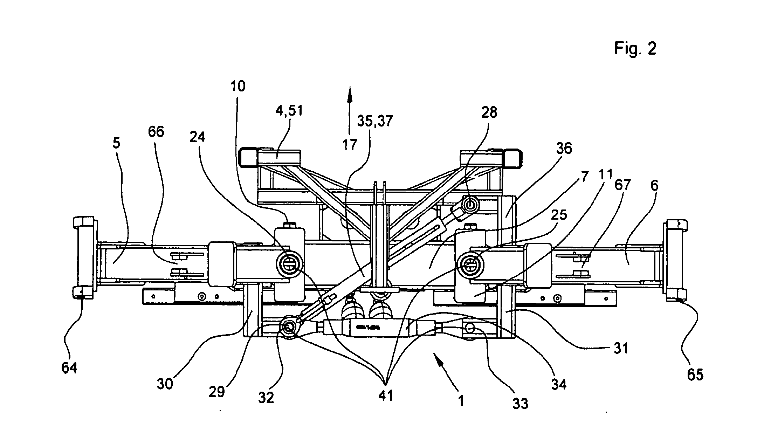

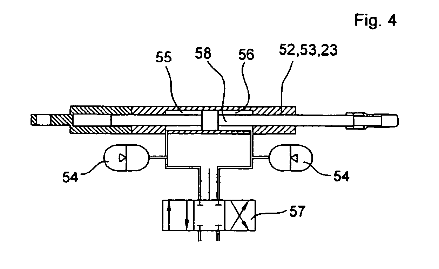

Figur 1 zeigt die Vorderansicht der Vorrichtung zur Aufnahme und Führung eines Spritzgestänges einer Feldspritze mit Hubschlitten 51 als Hubteil 4, das höhenbeweglich am nicht dargestellten Hubmast angeordnet ist. Der Hubschlitten 51 weist einen Querrahmen 7 auf, dem links und rechts in Arbeitsrichtung 17 liegende Längsachsen 10, 11 zugeordnet sind. Um die Längsachse 10 ist quer zur Arbeitsrichtung schwenkbar ein nach unten gerichteter Träger 20 angeordnet. Um die Längsachse 11 ist ein weiterer nach unten gerichteter Träger 21 quer zur Fahrtrichtung schwenkbar angeordnet. Der Träger 20 weist unten im Abstand zur Längsachse 10 ein Gelenk 13 auf. Gleichermaßen weist der nach unten gerichtete Träger 21 im Abstand zur Längsachse 11 ein Gelenk 14 auf. Die beiden Gelenke 13, 14 sind über den Führungslenker 22 miteinander verbunden. Die Längsachsen 10, 11 und die Gelenke 13, 14 bilden zusammen mit dem Querrahmen 7, den Trägern 20, 21 und dem Führungslenker 22 eine Viergelenkkette 40. Dabei sind die Längsachsen 10, 11 und die Gelenke 13, 14 so angeordnet, dass die Träger 20, 21 über den Führungslenker 22 parallel geführt seitlich verschwenkbar sind. Der Träger 20 weist oben eine aufrecht stehende Achse 24 auf und unten das Gelenk 26. Der Träger 21 weist oben die aufrecht stehende Achse 25 und unten das Gelenk 27 auf. Um die aufrecht stehende Achse 24 und um das Gelenk 26 ist der Schwenkrahmen 5 horizontal schwenkbar angeordnet und um die aufrecht stehende Achse 25 und das Gelenk 27 ist der Schwenkrahmen 6 horizontal schwenkbar angeordnet. Die aufrecht stehenden Achsen 24, 25 und die Gelenke 26, 27 sind so angeordnet, dass die Schwenkrahmen 5, 6 parallel zueinander geführt und horizontal verschwenkbar sind. Die Schwenkrahmen 5, 6 weisen Schwenkachsen 64, 65 auf, die jeweils eine Spritzgestängeeinheit tragen. Die Anlenkpunkte 66, 67, die ebenfalls an den Schwenkrahmen 5, 6 angeordnet sind, sind für die Hydraulikzylinder gedacht, über die die Spritzgestängeeinheiten eingeklappt werden können. Die Schwenkachsen 64, 65 sind hier annähernd horizontal in Arbeitsrichtung 17 angeordnet, wodurch es möglich ist, dass die Spritzgestängeeinheiten in vertikaler Richtung eingeklappt werden können. Die Schwenkachsen 64, 65 können auch so angeordnet sein, dass die Spritzgestängeeinheiten horizontal oder in einer anderen gewünschten Richtung eingeklappt werden können. Den jeweiligen Viergelenkketten 40, 41 sind Federdämpfer 23, 35 zugeordnet, die bei Gier- und Wankbewegungen der Feldspritze die dadurch bedingten Schwingungen abfedern und dämpfen. Die Anordnung des Federdämpfers 35 der Viergelenkkette 41 kann insbesondere der Figur 2 entnommen werden. Der Federdämpfer 35 der Viergelenkkette 41 ist vorzugsweise als Hydraulikzylinder 37 mit Hydrospeicher 38 ausgebildet. Der Federdämpfer 23 der Viergelenkkette 40 ist ebenfalls als Hydraulikzylinder 52 mit Hydrospeicher 54 ausgebildet. Dies kann insbesondere der Figur 4 entnommen werden. Als Hydraulikzylinder 52 kommt vorzugsweise ein Gleichlaufzylinder 53 mit zwei Hydrospeichern 54 zum Einsatz. Der Hydraulikzylinder 52 bzw. der Gleichlaufzylinder 53 ist in unterschiedlichen Abständen zu den Längsachsen 10, 11 mit den Trägern 20, 21 über die Gelenke 42, 43 verbunden. Werden die Träger 20, 21 seitlich verschwenkt, wird jeweils im Gleichlaufzylinder 53 Öl in einen der Hydrospeicher 54 verdrängt, wodurch diese Schwenkbewegung gedämpft wird. Die Hydrospeicher 54 bewirken, dass die Träger 20, 21 wieder in die Ausgangslage zurückbewegt werden.
Figur 2 zeigt eine Draufsicht auf die Vorrichtung zur Aufnahme und Führung von Spritzgestängen von Feldspritzen. Im Gegensatz zu Figur 1, in der die parallele Anordnung der Viergelenkkette 40 mit den Längsachsen 10, 11 und den Gelenken 13, 14 verdeutlich ist, verdeutlicht Figur 2 die Anordnung der Viergelenkkette 41. Beide Schwenkrahmen 5, 6 weisen Arme 30, 31 auf, die im Abstand zu den aufrecht stehenden Achse 24, 25 angeordnet sind und die Gelenke 32, 33 aufweisen. Die Gelenke 32, 33 sind über den Verbindungslenker 34 miteinander verbunden. Die Viergelenkkette 41 wird durch die aufrecht stehenden Achsen 24, 25 und den im Abstand zu den aufrecht stehenden Achsen 24, 25 an den Armen 30 und 31 angeordneten Gelenken 32, 33, zusammen mit dem Querrahmen 7 und dem Verbindungslenker 34 gebildet. Die Viergelenkkette 41 ist so ausgebildet, dass die Schwenkrahmen 5, 6 und damit auch die Spritzgestängeeinheiten parallel zueinander geführt bzw. annähernd parallel zueinander geführt werden. Wenn die Feldspritze sich in Arbeitsrichtung 17 bewegt und dabei starke Gierbewegungen auftreten, wird die Lage der Schwenkrahmen 5, 6 und den daran angeordneten Spritzgestängeeinheiten nur unwesentlich verändert. Am Schwenkrahmen 5 ist der nach hinten gerichtete Arm 30 und am Schwenkrahmen 6 der nach vorne gerichtete Arm 36 angeordnet. Beide Arme weisen Gelenke 28, 29 auf, an die der Federdämpfer 35 bzw. der Hydraulikzylinder 37 angreift. Durch diese Anordnung des Federdämpfer 35 werden alle auftretenden Kräfte der einen Seite des Schwenkrahmens 5 auf den anderen Schwenkrahmen 6 gedämpft übertragen und umgekehrt. Der nicht dargestellte Hubmast und der Hubschlitten 51 bleiben so weitestgehend unbelastet. Das gleiche ist auch der Fall, wenn Wankbewegungen auftreten und diese Wankbewegungen über den Hydraulikzylinder 52 mit Hydrospeicher 54 abgefedert oder getilgt werden. Wie bereits zuvor erwähnt sind die nicht dargestellten Spritzgestängeeinheiten jeweils direkt über die Schwenkachsen 64, 65 und über die Anlenkpunkte 66, 67 mit den Schwenkrahmen 5, 6 der Vorrichtung 1 verbunden.

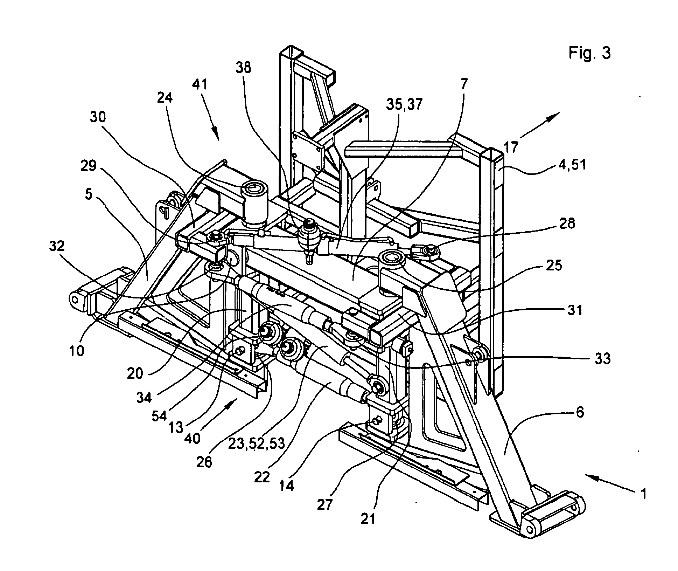

Figur 3 zeigt eine perspektivische Rückansicht der Vorrichtung 1 zur Aufnahme und Führung eines Spritzgestänges einer Feldspritze. Figur 3 verdeutlicht insbesondere die Anordnung der Viergelenkketten 40 und 41 und den dazu gehörigen Federdämpfern 23 und 35. Die Viergelenkkette 40 besteht insbesondere aus den Längsachsen 10, 11 und den Gelenken 13 und 14 und die Viergelenkkette 41 aus den aufrecht stehenden Achsen 24, 25 und den Gelenken 32 und 33. Der Schwenkrahmen 5 weist einen nach hinten ausgerichteten Arm 30 auf und der Schwenkrahmen 6 einen Arm 36, der nach vorne weist. Über die Gelenke 28 und 29 ist der Federdämpfer 35 mit den Gelenken 28 und 29 verbunden. Der Federdämpfer 35 ist als Hydraulikzylinder 37 mit Hydrospeicher 38 ausgebildet. Der Federdämpfer 23, der als Hydraulikzylinder 52 bzw. als Gleichlaufzylinder 53 ausgebildet ist mit den Hydrospeicher 54, ist gelenkig mit den Trägern 20, 21 verbunden, was insbesondere der Figur 1 zu entnehmen ist.
Figur 4 zeigt den Federdämpfer 23, der als Hydraulikzylinder 52 mit Hydrospeicher 54 ausgebildet ist. In diesem Fall handelt es sich bei dem Hydraulikzylinder 52 um einen Gleichlaufzylinder 53, der zwei Druckräume aufweist, den linken Druckraum 55 und den rechten Druckraum 56. Jeder der beiden Druckräume 55, 56 steht mit einem Hydrospeicher 54 in Verbindung. Über das Wegeventil 57 können die Druckräume 55, 56 wahlweise mit Öldruck beaufschlagt werden. Durch die Druckerhöhung eines Druckraumes, z. B. des rechten Druckraumes 56 reduziert sich die Funktionslänge des Gleichlaufzylinders 53, was eine Lageveränderung des Spritzgestänges bewirkt. Durch den erhöhten Druck fährt die Kolbenstange 58 ein, und zwar so weit bis der Druck in den beiden Druckräumen 55, 56 ausgeglichen ist.

Eine Lageveränderung des Spritzgestänges kann dann erforderlich sein, wenn quer zum Hang gefahren wird und das einseitige Einsinken oder Abplatten eines Rades eine Boden parallele Führung des Spritzgestänges nicht mehr gewährleistet. Bei der Rückfahrt in der gleichen Hanglage wird der Druck in den Druckräumen 55, 56 ausgetauscht bzw. gespiegelt. Die Funktionslänge des Gleichlaufzylinders 53 wird dabei so weit vergrößert, dass das Spritzgestänge nun für die Rückfahrt auch wieder Boden parallel ausgerichtet ist. Der Druckaustausch in den Druckräumen 55, 56 erfolgt beispielsweise über ein Wegeventil 57, das von Hand betätigt wird oder computer- und sensorunterstützt über Distanzmesssysteme. Per dreidimensional hinterlegter Feldkarte mit allen relevanten Geländedaten kann die Lage des Spritzgestänges auch GPS unterstützt so gesteuert werden, dass das Spritzgestänge immer parallel zum Boden steht.

## Patentansprüche

1. Vorrichtung (1) zur Aufnahme und Führung eines Spritzgestänges einer Feldspritze, mit einer Hubvorrichtung mit Hubteil (4), über die das Spritzgestänge vertikal bewegbar ist und an dem das Spritzgestänge gelenkig angeordnet ist, wobei für die Tilgung von fahrdynamischen Schwingungen Federdämpfer (23, 35) vorgesehen sind, wobei das Hubteil (4) einen Querrahmen (7) aufweist, **dadurch gekennzeichnet, dass** an dem Querrohnen (7) im Abstand links und rechts nach unten gerichtete Träger (20,21) angeordnet sind, die jeweils um in Arbeitsrichtung (17) liegende Längsachsen (10,11) quer zur Arbeitsrichtung (17) schwenkbar sind, dass die Träger (20,21) im Abstand unterhalb der Längsachsen (10,11) Gelenke (13,14) aufweisen, die über einen Führungslenker (22) gelenkig miteinander verbunden sind und so eine parallel angeordnete erste Viergelenkkette (40) gebildet ist, die die Träger (20,21) parallel zueinander führt, dass am linken Träger (20) ein linker Schwenkrahmen (5) mit einer linken Spritzgestängeeinheit und am rechten Träger (21) ein rechter Schwenkrahmen (6) mit einer rechten Spritzgestängeeinheit angeordnet sind und so eine nicht lineare Parallelführung der Spritzgestängeeinheiten zueinander und damit ein Wank- bzw. ein Hangausgleich des gesamten Spritzgestänges gebildet ist, dass die Träger (20,21) im Bereich der Längsachsen (10,11) oben aufrecht stehende Achsen (24,25) und unten Gelenke (26,27) aufweisen, um die die Schenkrahmen (5, 6) in horizontaler Richtung schwenkbar angeordnet sind, dass die Schwenkrahmen (5, 6) vorzugsweise nach hinten auskragende Arme (30,31) aufweisen, die im Abstand zu den aufrecht stehenden Achsen (24,25) mit Gelenken (32,33) versehen sind und dass ein Verbindungslenker (34) vorgesehen ist, der mit den Gelenken (32,33) in Verbindung steht und so eine zweite Viergelenkkette (41) gebildet wird, die einen Gierausgleich der Gestängeeinheiten bewirkend ausgebildet ist.

2. Vorrichtung nach Anspruch 1,
**dadurch gekennzeichnet,**
**dass** die Hubvorrichtung mit Hubteil (4) durch einen Hubmast mit Hubschlitten (51) gebildet ist.

3. Vorrichtung nach Anspruch 1 und 2,
**dadurch gekennzeichnet,**
**dass** die Träger (20) und (21) über Kugelgelenke oder Kreuzgelenke mit mindestens zwei Freiheitsgraden mit dem Querrahmen (7) schwenkbar verbunden sind und dass Führungsmittel vorgesehen sind, die ein Verschwenken der Träger (20) und (21) in Arbeitsrichtung (17) oder entgegen der Arbeitsrichtung (17) verhindernd und ein Verschwenken der Träger (20, 21) quer zur Arbeitsrichtung (17) zulassend ausgebildet sind.

4. Vorrichtung nach Anspruch 1 bis 3,
**dadurch gekennzeichnet,**
**dass** mindestens ein Federdämpfer (23, 35) als Hydraulikzylinder mit Hydrospeicher ausgebildet ist.

5. Vorrichtung nach Anspruch 1 bis 4,
**dadurch gekennzeichnet,**
**dass** mindestens der Federdämpfer (23), der mit der ersten Viergelenkkette (40) in Verbindung steht als Gleichlaufzylinder (53) mit zwei Druckräumen (55, 56) ausgebildet ist, dass jedem Druckraum (55, 56) mindestens ein Hydrospeicher (54) zugeordnet ist und dass der Öldruck in den Druckräumen (55, 56) vorzugsweise fernbedienbar veränderbar ist.

6. Vorrichtung nach Anspruch 1 bis 5,
**dadurch gekennzeichnet,**
**dass** der Führungslenker (22) als Hydraulikzylinder ausgebildet ist.

## Claims

1. Device (1) for holding and guiding a spray rod assembly of a field sprayer with a lifting device having a lifting part (4), by means of which device the spray rod assembly is vertically moveable and on which the spray rod assembly is flexibly arranged, wherein spring dampers (23, 35) are provided for the absorption of dynamic vibrations and wherein the lifting part (4) has a transverse frame (7),
**characterized**
**in that** at a distance to the left and right on the transverse frame (7), downwardly-orientated carriers (20, 21) are arranged, which are respectively transversely pivotable with respect to the working direction (17) around longitudinal axles (10, 11) extending in the working direction (17) such that at a distance below the longitudinal axles (10, 11) the carriers (20, 21) exhibit joints (13, 14), which are flexibly conjoined by means of a radius arm (22) thus forming a parallel first four-bar chain (40), which guides the carriers (20, 21) in parallel with one another such that a left-hand pivoting frame (5) with a left-hand spray rod assembly unit is arranged on the left-hand carrier (20) and a right-hand pivoting frame (6) with a right-hand spray rod assembly unit is arranged on the right-hand carrier (21), such that a non-linear parallel guidance of the spray rod assembly units with respect to one another is formed and coincidentally a rolling compensation resp. a slope compensation of the overall spray rod assembly, that the carrier (20, 21) in the region of the longitudinal axles (10, 11) exhibits vertically upstanding axles (24, 25) above and joints (26, 27) below, around which the pivot frames (5, 6) are pivotably arranged in the horizontal direction, in that the pivoting frames (5, 6) preferably have rearward projecting arms (30, 31), which are provided with joints (32, 33) at a distance to the vertically upstanding axles (24, 25) and that a connecting link (34) is provided which is conjoined with the joints (32, 33) and thereby forms a second four-bar chain (41) which is formed such as to effect a yaw compensation of the rod assembly units.

2. The device according to Claim 1,
**characterized**
**in that** the lifting device with lifting part (4) is formed by a lifting mast with lifting carriage (51).

3. The device according to Claims 1 and 2,
**characterized**
**in that** the carriers (20) and (21) are pivotably conjoined by means of ball joints or universal joints with the transverse frame (7) with at least two degrees of freedom and that guiding means are provided which are formed such as to prevent a pivoting of the carriers (20) and (21) in the working direction (17) or opposed to the working direction (17) and to permit a pivoting of the carriers (20, 21) transversely with respect to the working direction (17).

4. The device according to Claims 1 to 3,
**characterized**
**in that** at least one spring damper (23, 35) is formed as a hydraulic cylinder with hydraulic accumulator.

5. The device according to Claims 1 to 4,
**characterized**
**in that** at least the spring damper (23), which is conjoined with the first four-bar chain (40) is formed as a synchronized cylinder (53) with respectively two pressure chambers (55, 56), in that each pressure chamber (55, 56) is assigned at least one hydraulic accumulator (54) and in that the oil pressure in the pressure chambers (55, 56) is preferably remotely variable.

6. The device according to Claims 1 to 5,
**characterized**
**in that** the radius arm (22) is formed as a hydraulic cylinder.

## Revendications

1. Dispositif (1) pour le logement et le guidage d'une tringlerie de pulvérisation d'un irrigateur de champ, avec un dispositif de levage avec pièce de levage (4) au moyen duquel la tringlerie de pulvérisation peut être déplacée verticalement et sur lequel la tringlerie de pulvérisation est disposée de manière articulée, étant donné que des amortisseurs à ressorts (23, 35) sont prévus pour l'amortissement des vibrations dynamiques de conduite, étant donné que la pièce de levage (4) présente un cadre transversal (7),
**caractérisé**
**en ce que** sont disposés à gauche et à droite du cadre transversal (7), écartés l'un de l'autre, des supports (20, 21) orientés vers le bas qui sont respectivement pivotants transversalement par rapport au sens de travail (17) autour d'axes longitudinaux (10, 11) situés dans le sens de travail (17), en ce que les supports (20, 21) présentent, écartés l'un de l'autre au-dessous des axes longitudinaux (10, 11), des articulations (13, 14) qui sont reliées l'une avec l'autre de manière articulée par l'intermédiaire d'une bielle de poussée (22) et, ainsi, est formée une première chaîne cinématique à quatre joints articulés (40) disposée en parallèle et qui guide les supports (20, 21) parallèlement l'un à l'autre, en ce que sont disposés sur le support gauche (20) un cadre orientable gauche (5) avec un système de tringlerie de pulvérisation gauche et sur le support de droite (21) un cadre orientable de droite (6) avec un système de tringlerie de pulvérisation de droite et, ainsi, est formée un guidage parallèle non linéaire des systèmes de tringlerie de pulvérisation les uns par rapport aux autres et donc une compensation de roulis ou d'inclinaison de l'entière tringlerie de pulvérisation, en ce que les supports (20, 21) présentent au niveau des axes longitudinaux (10, 11) des axes verticaux (24, 25) en haut et, en bas, des articulations (26, 27) autour desquelles les cadres orientables (5, 6) sont disposés de manière pivotante dans le sens horizontal, en ce que les cadres orientables (5, 6) présentent de préférence des bras (30, 31) s'étendant vers l'arrière qui sont dotés d'articulations (32, 33) à une distance des axes verticaux (24, 25), et en ce qu'une bielle de connexion (34) est prévue, bielle qui est en liaison avec les articulations (32, 33) et, ainsi, est formée une deuxième chaîne cinématique à quatre joints articulés (41) qui est formée de manière à entraîner une compensation de lacet des unités de tringlerie.

2. Dispositif selon la revendication 1,
**caractérisé**
**en ce que** le dispositif de levage avec pièce de levage (4) est formé par un mât de levage avec chariot élévateur (51).

3. Dispositif selon les revendications 1 et 2,
**caractérisé**
**en ce que** les supports (20) et (21) sont reliés de manière pivotante par l'intermédiaire de joints à rotule ou de joints universels avec au moins deux degrés de liberté au cadre transversal (7) et en ce que sont prévus des moyens de guidage qui empêchent le pivotement des supports (20) et (21) dans le sens de travail (17) ou dans le sens opposé au sens de travail (17) et permet le pivotement des supports (20, 21) transversalement par rapport au sens de travail (17).

4. Dispositif selon les revendications 1 à 3,
**caractérisé**
**en ce que** au moins un amortisseur à ressort (23, 35) est formé comme cylindre hydraulique avec accumulateur hydraulique.

5. Dispositif selon les revendications 1 à 4,
**caractérisé**
**en ce que** au moins l'amortisseur à ressort (23), qui est en liaison avec la première chaîne cinématique à quatre joints articulés (40), est formé comme vérin à vitesse constante (53) avec deux compartiments de pression (55, 56), en ce qu'est affecté à chaque compartiment de pression (55, 56) au moins un accumulateur hydraulique (54) et en ce que la pression d'huile dans les compartiments de pression (55, 56) peut de préférence être variée à distance.

6. Dispositif selon les revendications 1 à 5,
**caractérisé**
**en ce que** la bielle de poussée (22) est formée comme cylindre hydraulique.
